# EUROPÄISCHE PATENTSCHRIFT

(11) **EP 0 276 456 B1**
(45) Veröffentlichungstag und Bekanntmachung des Hinweises auf die Patenterteilung: **20.01.1993**
(21) Anmeldenummer: 87118886.8
(22) Anmeldetag: 19.12.1987
(51) Int. Cl.: A21C 11/10, A21C 11/16

(54) **Verfahren und Vorrichtung zum Herstellen von Knäckebrot**
Method and apparatus for producing crispbread
Méthode et appareil pour la production de galettes croustillantes

(30) Priorität: 27.01.1987 DE 3702332
(43) Veröffentlichungstag der Anmeldung: 03.08.1988
(73) Patentinhaber: Lieken-Batscheider Mühlen- und Backbetriebe GmbH, D-55120 Mainz (DE)
(72) Erfinder: Schäfer, Roland, D-8024 Deisenhofen (DE)
(74) Vertreter: Goddar, Heinz J., Dr.

(56) Entgegenhaltungen:
- EP-A- 0 024 716
- EP-A- 0 160 596
- EP-A- 0 203 321
- DE-A- 2 541 052
- DE-A- 2 810 853
- DE-C- 964 132
- GB-A- 1 287 585

## Beschreibung

Die Erfindung betrifft ein Verfahren und eine Vorrichtung zum Herstellen von Knäckebrot nach dem einleitenden Teil der Patentansprüche 1 bzw. 6.

Bei der Knäckebrotherstellung ist es bisher insbesondere im sogenannten weitverbreiteten Eiswasserverfahren (beschrieben z. B. in der Zeitschrift "Der Bäcker und Konditor", Heft 4/1960, Seiten 110 ff.) allgemein üblich, den schaumigen Teig nach Formung zu einem Teigband von ca. 4 bis 6 mm Höhe auf einem Endlosförderer abzulegen und, auf dem Endlosförderer liegend, in Fladen zu unterteilen, die wesentlich größer sind als die später endgültig herzustellenden Knäckebrotscheiben. Der Grund für das Unterteilen liegt darin, daß das Teigband - abgesehen vom sogenannten Burger-Verfahren, auf welches weiter unten noch eingegangen wird - nicht als ganzes verbacken werden kann, weil es im Ofen schrumpfen, verbeulen und gegebenenfalls anbrennen würde. Andererseits entstehen beim Unterteilen des Teigbandes in Fladen infolge der üblicherweise verwendeten Schneidrollen verdünnte Randbereiche der Einzelfladen, die beim Backvorgang zum Verbrennen und Verkohlen neigen und daher nach dem Backen abgetrennt werden müssen, so daß es ohne Inkaufnahme untolerierbar großer Ausschußmengen nicht möglich ist, den Fladen bereits die Größe endgültig herzustellender Knäckebrotscheiben zu geben. Die Fladen werden dann nach dem Backen nicht nur von den minderwertigen Randbereichen befreit, sondern insgesamt durch Sägen in die endgültige Form von Knäckebrotscheiben gebracht. Diese Vorgehensweise hat den Nachteil, daß infolge der erforderlichen Sägevorgänge größere Mengen an Abfall durch Sägemehl und -bruch entstehen, wobei 10 bis 25 Gew.-% keine Seltenheit sind. Außerdem wird beim Zersägen eines Knäckefladens naturgemäß dessen grobblasigporöse innere Struktur zugänglich gemacht, so daß beim Lagern die Aromastoffe leicht oxidieren und nach außen diffundieren können. Schließlich besteht ein weiterer Nachteil der bekannten Vorgehensweise darin, daß die Knäckefladen beim Sägen mechanisch so beansprucht werden, daß sie an natürlichen Schwachstellen anbrechen können und beim Verpacken oder beim Transport in der Packung leicht zerbrechen, wobei sich bei derartigen Bruchvorgängen der dann entstehende offenporige Rand mit seinen scharfen Kanten bezüglich der Haltbarkeit besonders negativ auswirkt.

Beim Burger-Verfahren wird das Teigband zwar endlos im Durchlaufverfahren gebacken, jedoch müssen dabei die äußeren Ränder nach dem Backen ebenfalls abgetrennt werden, wobei Zusätzlich mittels spezieller Schneideeinrichtungen die Unterteilung in Knäckebrotscheiben erfolgt. Die sensorische Produktgualität läßt bei dem so hergestellten Knäckebrot zu wünschen übrig.

Aus der DE-A-25 41 052 ist es zwar bereits bekannt, bei der Herstellung von persischem Fladenbrot auf einem Endlosförderer ähnlich dem zur Knäckebrotherstellung verwendeten Einzelteiglinge abzulegen, jedoch ist es dabei notwendig, von vornherein mittels geeigneter Ausgabeeinrichtungen Einzelteiglinge zu erzeugen, ohne daß eine Möglichkeit zur wirtschaftlichen Vereinzelung von Teigbändern der bei der Knäckebrotherstellung angegebenen Art angesprochen würde.

Der Erfindung liegt die Aufgabe zugrunde, ein Verfahren sowie eine Vorrichtung der eingangs genannten Art zu schaffen, die es ermöglichen, unter Verbesserung der Haltbarkeit der herzustellenden Knäckebrotscheiben die mit dem bekannten zweistufigen Unterteilen, nämlich zunächst in Knäckefladen backfähiger Größe und dann durch Sägen in endgültige Knäckebrotscheiben, verbundenen Nachteile zu vermeiden.

Erfindungsgemäß wird diese Aufgabe bei einem Verfahren der eingangs genannten Art durch die im Kennzeichen des Patentanspruches 1 genannten Merkmale gelöst. Bevorzugte Ausführungsformen des Verfahrens nach der Erfindung sind Gegenstand der Unteransprüche 2 bis 5. Die Vorrichtung nach der Erfindung ist Gegenstand des Patentanspruches 6. Bevorzugte Ausführungsformen der Vorrichtung nach der Erfindung sind Gegenstand der Unteransprüche 7 bis 18.

Der Erfindung liegt die überraschende Erkenntnis zugrunde, daß es gelingt, die mit der herkömmlichen Vorgehensweise verbundenen, weiter oben beschriebenen Nachteile zu vermeiden, indem das Teigband in Einzelteigbänder mit geschlossenporiger, vorzugsweise verdickter Längsrandkonfiguration und ggf. die Einzelteigbänder wiederum in Einzelteiglinge mit geschlossenporiger Querrandkonfiguration unterteilt werden, ehe das Ablegen auf den Endlosförderer erfolgt, wobei die Einzelteiglinge zumindest in einer Dimension bereits die Größe der endgültigen herzustellenden Knäckebrotscheiben haben. Der Teig wird also so ausgeformt, daß er in zumindest einer Dimension bereits in den Verpackungsmaßen vorliegt oder aber ohne Sägen auf diese Größe gebracht werden kann, wodurch der Abfall auf weniger als 5 % verringert werden kann. Dadurch, daß die Einzelteiglinge - vorzugsweise ringsherum - einen verstärkten, gleichmäßig geformten Rand haben, wird ein Anbrennen des Randes durch eine Schwächung wie beim herkömmlichen Schneidvorgang verhindert. Es entsteht ein zart gebräunter, aromatischer, geschlossener Rand, der das Entweichen von Aromastoffen beim Lagern verhindert bzw. weitgehend bremst und auf diese Weise zu einer stark verbesserten Haltbarkeit des hergestellten Knäckebrotes führt.

Nachstehend sind eine herkömmliche Vorrichtung zur Knäckebrotherstellung sowie Ausführungsbeispiele der Erfindung anhand der schematischen Zeichnung im einzelnen erläutert. Dabei zeigt:
- Fig. 1: eine herkömmliche Vorrichtung zum Unterteilen eines für die Knäckebrotherstellung bestimmten Teigbandes in fladenbreite Längsstreifen in der Seitenansicht, teilweise geschnitten;
- Fig. 2: das Ausführungsbeispiel von Fig. 1 von der Ofenstrecke aus gesehen, teilweise geschnitten;
- Fig. 3: in vergrößerter Darstellung ein mittels der Vorrichtung von Fig. 1 und Fig. 2 in herkömmlicher Weise unterteiltes Teigband im Schnitt senkrecht zur Transportrichtung des dabei vorgesehenen Endlosförderers;
- Fig. 4: in perspektivischer Darstellung, von schräg nach oben gesehen, einen unter Zuhilfenahme der Vorrichtung von Fig 1 und 2 in herkömmlicher Art hergestellten Fladen beim Backprozeß in der Ofenstrecke;
- Fig. 5: eine Formdüse eines Ausführungsbeispieles der Vorrichtung nach der Erfindung im Schnitt senkrecht zur Flußrichtung des Teigbandes;
- Fig. 6: bei einem angewandelten Ausführungbeispiel der Erfindung einen in den Walzenspalt eines Walzenabzuges eingreifenden Schneidensatz zum Unterteilen des Teigbandes, in Richtung der Walzenachsen gesehen, teilweise geschnitten;
- Fig. 7: links in der Ansicht entgegen der Transportrichtung des Teigbandes und rechts in Fig. 6 entsprechender Seitenansicht eine Schneide des bei dem Ausführungsbeispiel von Fig. 6 verwendeten Schneidensatzes;
- Fig. 8: ein weiteres Ausführungsbeispiel einer Vorrichtung nach der Erfindung mit Schneiddrähten zur Zerlegung mittels der Vorrichtung von Fig. 5 oder 6 erzeugter Einzelteigbänder in Einzelteiglinge, oben senkrecht zur Achse des Walzenabzuges und zur vertikalen Fördereinrichtung der vom Walzenabzug auf den Endlosförderer herabhängenden Einzelteigbänder und unten senkrecht von unten in Richtung auf einen Formdüsensatz gesehen;
- Fig. 9: mittels der Vorrichtung von Fig. 8 mit unterschiedlichen Längsabständen auf den Endlosförderer der Vorrichtung nach der Erfindung abgelegte Einzelteiglinge; und
- Fig. 10: ein abgewandeltes Ausführungsbeispiel einer Vorrichtung nach der Erfindung mit Zerlegeeinrichtung zum Unterteilen der senkrecht vom Walzenabzug herabhängenden Einzelteigbänder in Einzelteiglinge vor dem Ablegen auf den Endlosförderer.

Allgemein wird bei einem weitverbreiteten Verfahren zur Knäckebrotherstellung, welches als Eiswasserverfahren bekannt ist, wie folgt vorgegangen:

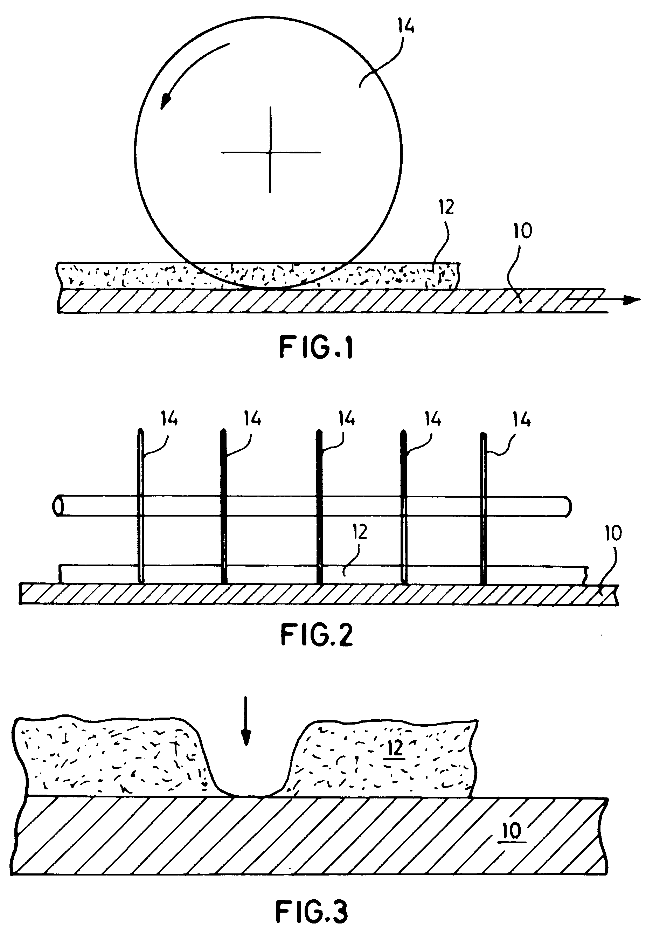

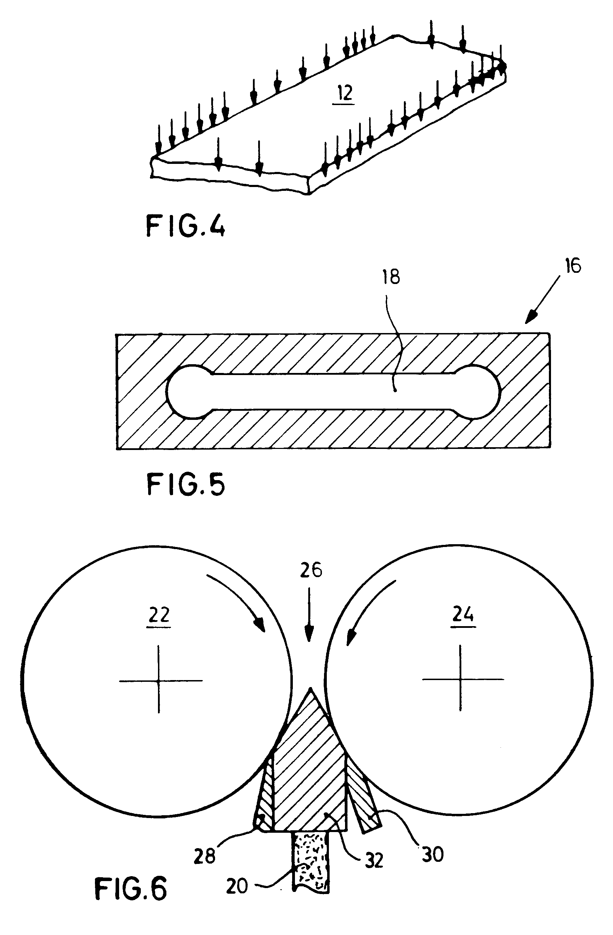

Schrot und Wasser werden zusammen mit den Gewürzen angemischt und eine bestimmte Zeit verquollen, woraufhin in den so hergestellten Teig Luft gedrückt oder angesaugt wird. Die auf diese Weise gebildete Masse wird üblicherweise in z. B. einem Schabewärmetauscher gleichzeitig gekühlt und homogenisiert. Der entstandene schaumige Teig wird zur Formung zu einem Teigband mit einer Höhe von ca. 4 bis 6 mm auf sich gegensinnig drehende horizontal angeordnete Glattwalzen aufgetragen und infolge des Adhäsionsvermögens des Teiges auf den Glattwalzen durch den einstellbaren Walzenspalt gezogen oder geschleppt. Vom Walzenspalt aus, aus dem sich das so hergestellte Teigband unter der Einwirkung von Messern löst, die in bekannter Weise an geeigneten Stellen auf die Glattwalzen gedrückt werden, hängt das Teigband, welches in diesem Zustand - abgesehen vom bereits diskutierten Burger-Verfahren - nicht backfähig ist, weil es bei Verbacken in voller Breite im Ofen schrumpfen, verbeulen und gegebenenfalls anbrennen würde, vertikal bis auf einen horizontal verlaufenden Endlosförderer in vorzugsweise Bandform herab, auf dem es abgelegt und zur Ofenstrecke und durch diese hindurch gefördet wird. Wie bereits dargelegt wurde, läßt sich das auf diese Weise beim herkömmlichen Knäckeverfahren hergestellte Teigband nicht ohne weiteres verbacken, vielmehr ist es notwendig, den Teig in einzelne Fladen zu trennen, deren Größe so bemessen ist, daß unter den jeweiligen Umständen ein qualitativ gutes Endprodukt erhalten wird. Dieses Trennen des Teiges in einzelne Fladen erfolgt mittels der in Fig. 1 und 2 gezeigten Vorrichtung, bei der auf ein auf einem Endlosförderer 10 abgelegtes Teigband 12 von oben Schneidrollen 14 gedrückt werden, die das Teigband an den Schnittstellen abquetschen. Dabei entsteht die in Fig. 3 wiedergegebene Konfiguration, wobei die Einwirkungsrichtung der Schneidrollen 14 durch den vertikalen Pfeil angedeutet ist. Bei diesem Quetschvorgang entstehen, wie Fig. 3 deutlich erkennen läßt, relativ dünne Randbereiche in den auf diese Weise hergestellten parallelen Teigstreifen in Fladenbreite, die dann, wie Fig. 4 erkennen läßt, beim Backvorgang infolge der durch die Pfeile in ihrer Einwirkungsrichtung angedeutete Strahlungshitze im Ofen bevorzugt verbrennen. Dieses Verbrennen oder Verkohlen des Fladenrandes ist selbst dann unvermeidlich, wenn die in Fig. 3 wiedergegebene Randkonfiguration der fladenbreiten Teigstreifen nicht in dieser Extremform, d.h. mit sehr dünnen Randbereichen, erzielt wird, sondern bereits dann, wenn, wie bei Verwendung von Schneidrollen unvermeidlich, der Fladenrand zusammengedrückt wird. Es ist daher bei der herkömmlichen Vorgehensweise, wie sie vorstehend unter Bezugnahme auf die Fig. 1 bis 4 erläutert wurde, unerläßlich, die Fladen nach dem Backen zu besäumen, um die verbrannten Randbereiche abzutrennen. Um den Randabfall zu minimieren, werden die Fladen demzufolge möglichst groß gehalten, so daß sie zusätzlich auch noch auf die für den Verbraucher übliche Größe gesägt werden müssen.

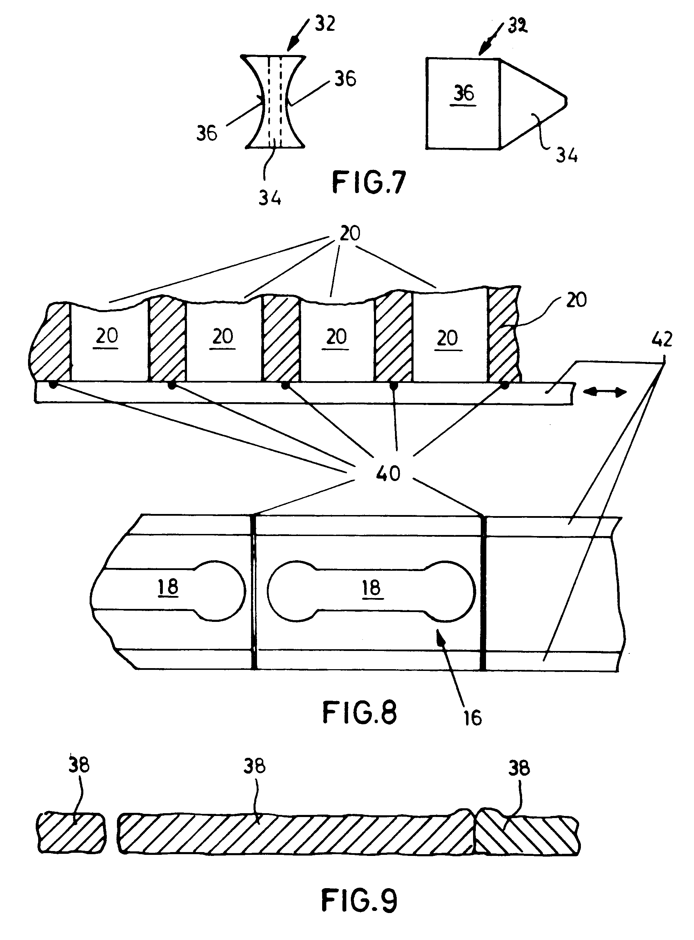

Anders arbeitet die Vorrichtung nach der Erfindung. Bei einem ersten Ausführungsbeispiel, wie es in Fig. 5 wiedergegeben ist, sind im Anschluß an den oben beschriebenen Walzenabzug im vertikalen "Herabhängbereich" des Teigbandes, also zwischen dem Walzenspalt und dem Endlosförderer, eine Anzahl von Formdüsen 16 angeordnet, deren Düsenmund 18 im wesentlichen langgestreckt-rechteckig ausgebildet, jedoch an seinen Enden keulenartig aufgewölbt ist. Das Teigband wird beim Hindurchdrücken durch die Düsenmünder 18 der zu einem sich über die gesamte Länge des Walzenspaltes des Walzenabzuges erstreckenden Düsensatz zusammengefaßten Formdüsen 16 in eine Anzahl von Einzelteigbändern 20 (z.B. Fig. 8) aufgeteilt, die auf dem Endlosförderer 10 mit geringem gegenseitigen Querabstand liegen und die infolge der konvexen Aufwölbung der Endbereiche der Düsenmünder 18 eine geschlossene, konvexe Längsrandkonfiguration mit verdickten Randbereichen aufweisen.

Bei dem in Fig. 6 gezeigten abgewandelten Ausführungsbeispiel der Vorrichtung nach der Erfindung ist in einem zwischen zwei Glattwalzen 22, 24 eines Walzenabzuges vorgesehenen Walzenspalt 26 zusätzlich zu den weiter oben im Zusammenhang mit dem Stand der Technik bereits erörterten Ablösemessern 28, 30 ein Satz von Schneiden 32 vorgesehen, deren gegenseitiger Abstand, in Fig. 6 senkrecht zur Zeichenebene gesehen, so bemessen ist, daß die dadurch aus dem in Fig. 6 von oben ankommenden Teigband gebildeten Einzelteigbänder 20 die auch mittels des Ausführungsbeispieles von Fig. 5 realisierte endgültige Breite von Knäckebrotscheiben, wie sie später verpackt und verkauft werden sollen, haben. Die Schneiden weisen dabei eine der Zuführrichtung des Teigbandes entgegengerichtete, also in Fig. 6 nach oben weisende, spitz zulaufende Messerkante 34 (Fig. 7) sowie an ihren in Abförderrichtung der Einzelteigbänder 20 liegenden Endbereichen konkave Formflächen 36 auf, womit auch hier wiederum bewirkt wird, daß die Einzelteigbänder 20 eine geschlossene, verdickte Längsrandkonfiguration erhalten.

Zum Zerlegen der Einzelteigbänder 20 in Einzelteiglinge 38 (Fig. 9) weist das Ausführungsbeispiel der Vorrichtung nach der Erfindung gemäß Fig. 8 eine Anzahl von dünnen Schneiddrähten 40 auf, die an rahmenartigen Schneiddrahtträgern 42 angebracht sind. Die Schneiddrähte 40 können nicht nur aus beidseitig fixierten sehr dünnen Edelstahldrähten, sondern beispielsweise auch aus besonders festen, dünnen Kunststoff- oder Keramikfasern bestehen. In jedem Fall dienen sie dazu, sich mit großer Geschwindigkeit von z.B. 2 bis 10 m pro Sekunde bewegend die Einzelteigbänder 20 unmittelbar im Anschluß an die Düsenmünder 18 in getakteter Schnittweise abzutrennen. (Fig. 8).

Fig. 9 läßt erkennen, daß sich durch geeignete Einstellung der Relativgeschwindigkeiten des Endlosförderers 10 einerseits und der Glattwalzen 22, 24 andererseits der Längsabstand zwischen den Einzelteiglingen 38 auf den Endlosförderer einstellen und den Zielkriterien anpassen läßt. Hierdurch ist es beispielsweise möglich, den Längsabstand soweit zu verringern, daß die Einzelteiglinge 38, wie in Fig. 9 rechts gezeigt, leicht zusammenbacken, sich so optimal vor Verbrennung schützen, jedoch auch nach dem Backen problemlos und ohne Abfall auseinanderbrechbar sind.

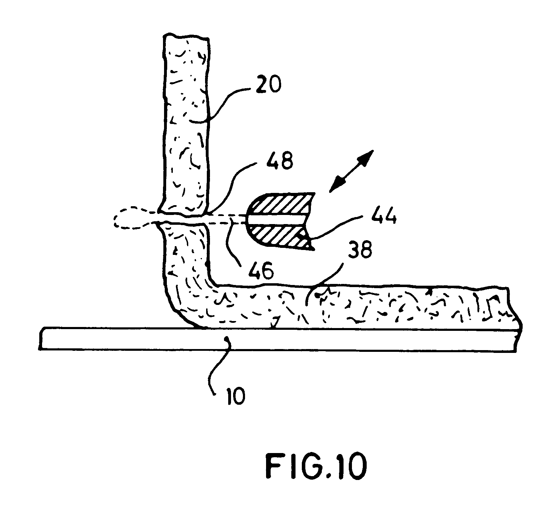

Bei einem weiteren Ausführungsbeispiel der Erfindung, wie es in Fig. 10 gezeigt ist, wird zum Zerlegen der Einzelteigbänder 20 in Einzelteiglinge 38 eine Trenndüse 44 verwendet, die in Richtung des Doppelpfeiles quer zur Transportrichtung der Einzelteigbänder 20 rasch hin- und herbewegbar ist, so daß bei Aufbringen eines scharfen Trenngas- oder Trennflüssigkeitsstrahles 46 auf das Einzelteigband 20, welches von den Glattwalzen 22, 24 herabhängt, an einer Trennposition 48 die Zerlegung erfolgt. Der Gas- oder Flüssigkeitsstrahl hat natürlich eine bestimmte kinetische Energie und Geometrie und trifft senkrecht auf das Einzelteigband 20, wodurch dieses zerlegt wird.

Insgesamt arbeiten die vorstehend beschriebenen Ausführungsbeispiele der Vorrichtung nach der Erfindung bei Durchführung des erfindungsgemäßen Verfahrens wie folgt:

Der Teig wird zunächst gemischt, gequollen, mit Luft beaufschlagt und homogenisiert. Dann wird er entweder direkt durch einen Satz von Formdüsen 16 zu Einzelteigbändern geformt oder aber mittels sich gegensinnig drehender Speisewalzen in Form der Glattwalzen 22, 24 durch die betreffenden Formdüsen 16 gefördert, wodurch eine Reihe paralleler Einzelteigbänder 20, noch vertikal auf den Endlosförderer 10 herabhängend, gebildet wird. Eine abweichende Vorgehensweise besteht darin, daß das Teigband nach Ausformung durch die sich gegensinnig drehenden Glattwalzen 22, 24 unter Ablösen mittels der Ablösemesser 28, 30 mittels des Satzes von Schneiden 32, die entweder unmittelbar im Walzenspalt 26 liegen oder kurz hinter den Glattwalzen 22, 24 angeordnet sind, in Einzelteigbänder zerlegt, wobei die Schneiden 32 infolge ihrer Form den Einzelteigbändern 20 die gewünschte geschlossene, verdickte Längsrandkonfiguration geben.

Die auf eine der vorstehend beschriebenen Weisen hergestellten Einzelteigbänder 20, deren Breite also der Breite später zu verpackender, endgültiger Knäckebrotscheiben entspricht, werden entweder mittels der Schneiddrähte 40 oder aber der Trenndüse 44, die beim Ausführungsbeispiel von Fig. 10 quer zur Transportrichtung über die Einzelteigbänder 20 rasch bewegbar ist, in die Einzelteiglinge 38 zerlegt. Dabei werden Einzelteiglinge, deren Länge in Transportrichtung der Länge der endgültig herzustellenden Knäckebrotscheiben entspricht, mit glatter Randkonfiguration hergestellt, wobei ebenso wie bei der Längsrandkonfiguration die natürliche Porung des Teigschaumes unmittelbar an der Oberfläche zugunsten einer homogenen Haut verändert ist. Dabei eignet sich die Vorgehensweise mittels Schneiddrähten 40 insbesondere in Kombination mit Formdüsen 16, während die Verfahrensweise, bei der eine Trenndüse 44 verwendet wird, sich insbesondere in Kombination mit der Aufteilung des Teigbandes 12 in die Einzelteigbänder 20 mittels der Schneiden 32 bewährt hat.

## Patentansprüche

1. Verfahren zum Herstellen von Knäckebrot, bei dem Teig in Form eines endlosen Teigbandes (12), dessen Breite die zum Backvorgang zulässige Höchstbreite überschreitet, aus einem Homogenisierbehälter - vorzugsweise mittels eines Walzenabzuges mit zwei gegensinnig laufenden Glattwalzen (22, 24) - abgegeben und nach Längs- und Querunterteilung in Fladen beim Backvorgang zulässiger Größe auf einem Endlosförderer (10) zum Backen durch eine Ofenstrecke geführt wird, dadurch gekennzeichnet, daß das Teigband (12) zur Erzielung einer nach dem Backvorgang geschlossenporigen Längsrandkonfiguration vor dem Ablegen auf den Endlosförderer (10) in eine Anzahl von parallelen - ggf. einen geringfügigen gegenseitigen Querabstand aufweisenden - getrennten Einzelteigbändern (20) mit einer endgültigen Breite entsprechend einer der beiden Kantenlängen der verpackbaren rechteckigen Knäckebrotscheiben aufgeteilt wird, deren Längsränder im Verhältnis zu deren Längsmittelbereich verdickt ausgebildet sind, wobei die Knäckebrotscheiben nach dem Backvorgang mit unveränderten Breitenmaß verpackt werden.

2. Verfahren nach Anspruch 1, dadurch gekennzeichnet, daß den Längsrändern der Einzelteigbänder (20) eine im wesentlichen konvexe Konfiguration gegeben wird.

3. Verfahren nach Anspruch 1 oder 2, dadurch gekennzeichnet, daß die Einzelteigbänder (20) vor dem Ablegen auf den Endlosförderer (10) quer zu ihrer Längserstreckung in-ggf. gegenseitigen Längsabstand aufweisende - Einzelteiglinge (38) mit nach dem Backvorgang geschlossener Querrandkonfiguration und einer Länge entsprechend der anderen der beiden Kantenlängen der verpackbaren rechteckigen Knäckebrotscheiben zerlegt wird.

4. Verfahren nach Anspruch 3, dadurch gekennzeichnet, daß die Querränder der Einzelteiglinge (38) im Verhältnis zu deren Zentralbereich verdickt ausgebildet werden.

5. Verfahren nach Anspruch 3 oder 4, dadurch gekennzeichnet, daß die Einzelteiglinge (38) durch einstellbar zeitlich versetztes Ablegen auf den Endlosförderer (10) vereinzelt werden.

6. Vorrichtung zur Durchführung des Verfahrens nach einem der vorangehenden Ansprüche, mit einem der Teigzubereitung dienenden Homogenisierbehälter, einer dem Homogenisierbehälter nachgeschalteten Ausgabeeinrichtung - vorzugsweise in Form eines Walzenabzuges mit zwei gegensinnig laufenden Glattwalzen (22, 24) - zum Erzeugen eines im wesentlichen vertikal nach unten verlaufenden endlosen Teigbandes (12), dessen Breite die beim Backvorgang zulässige Höchstbreite überschreitet, einem - vorzugsweise horizontalen - Endlosförderer (10) zum Ablegen des Teigbandes und Hindurchtransportieren desselben durch eine Ofenstrecke, und Einrichtungen zum Längs- und Querunterteilen des Teigbandes in Fladen beim Backvorgang zulässiger Größe, gekennzeichnet durch eine Aufteileinrichtung (16, 32) zum Aufteilen des die Ausgabeeinrichtung (22, 24) verlassenden Teigbandes (12) in eine Anzahl gegenseitigen Querabstand aufweisender paralleler, getrennter Einzelteigbänder (20) mit nach dem Backvorgang geschlossener Längsrandkonfiguration, im Verhältnis zu ihrem Längsmittelbereich verdickt ausgebildeten Längsrändern und einer endgültigen Breite entsprechend einer der beiden Kantenlängen der verpackbaren rechteckigen Knäckebrotscheiben.

7. Vorrichtung nach Anspruch 6, dadurch gekennzeichnet, daß die Aufteileinrichtung eine Anzahl langgestreckter, mit der Längsachse ihres Düsenmundes (18) parallel zur Ebene des Teigbandes (12) liegender Formdüsen (16) mit im wesentlichen langgestreckt-rechteckigem Querschnitt des Düsenmundes (18) aufweist, wobei der Querschnitt des Düsenmundes (18) nahe seinen Enden erweitert ist.

8. Vorrichtung nach Anspruch 7, dadurch gekennzeichnet, daß der Düsenmund (18) der Formdüsen (16) nahe seinen Enden keulenartig aufgeweitet ist.

9. Vorrichtung nach Anspruch 6, dadurch gekennzeichnet, daß der Ausgabeeinrichtung (22, 24) eine Anzahl von Aufteilschneiden (32) nachgeschaltet ist, deren gegenseitiger Abstand im wesentlichen der Breite der herzustellenden Einzelteigbänder (20) entspricht.

10. Vorrichtung nach Anspruch 9, dadurch gekennzeichnet, daß die Aufteilschneiden (32) der Teigzuführrichtung zugewandte Messerkanten (34) aufweisen, die im Falle der Verwendung eines Walzenabzuges senkrecht zur Achse der Glattwalzen (22, 24) liegen.

11. Vorrichtung nach Anspruch 9 oder 10, dadurch gekennzeichnet, daß die Aufteilschneiden (32) der Teigabführrichtung zugewandte konkave Formflächen (36) zum Erzeugen einer konvexen Längsrandkonfiguration der Einzelteigbänder (20) aufweisen.

12. Vorrichtung nach einem der Ansprüche 6 bis 11, dadurch gekennzeichnet, daß der Aufteileinrichtung (16, 32) eine die Einzelteigbänder (20) vor dem Erreichen des Endlosförderers (10) in Einzelteiglinge (28) mit geschlossener Querrandkonfiguration zerlegende Zerlegeeinrichtung (40, 44) nachgeschaltet sind.

13. Vorrichtung nach Anspruch 12, dadurch gekennzeichnet, daß die Transportgeschwindigkeit der Ausgabeeinrichtung (22, 24) einerseits und des Endlosförderers (10) andererseits derart abstimmbar sind, daß die Einzelteiglinge (38) auf dem Endlosförderer (10) mit einstellbarem gegenseitigen Längsabstand ablegbar sind.

14. Vorrichtung nach Anspruch 12 oder 13, dadurch gekennzeichnet, daß die Zerlegeeinrichtung eine Anzahl quer zu der Aufteileinrichtung (16, 32) hin- und herbewegbarer Schneiddrähte (40) aufweist.

15. Vorrichtung nach Anspruch 12 oder 13, dadurch gekennzeichnet, daß die Zerlegeeinrichtung eine Trenndüseneinrichtung (44) zum Aufgeben eines Fließmittel-Trennstrahles (46) senkrecht zur Transportrichtung auf die von der Aufgabeeinrichtung (22, 24) herabhängenden Einzelteigbänder (20) aufweist.

16. Vorrichtung nach Anspruch 15, dadurch gekennzeichnet, daß die Trenndüseneinrichtung eine quer zur Transportrichtung der Einzelteigbänder (20) hin- und herbewegbare Trenndüse (44) aufweist.

17. Vorrichtung nach Anspruch 15 oder 16, dadurch gekennzeichnet, daß die Trenndüse (44) mit Trenngas beaufschlagbar ist.

18. Vorrichtung nach einem der Ansprüche 15 bis 17, dadurch gekennzeichnet, daß die Trenndüse (44) mit Trennflüssigkeit beaufschlagbar ist.

## Claims

1. A method of producing crispbread in which dough in the form of an endless strip (12) having a width greater than the maximum width permitted in the baking process is delivered from a homogenising container - preferably via delivery rollers comprising two smoothing rollers (22, 24) rotating in opposite directions - and is longitudinally and transversely divided into flat pieces having a size permitted in the baking process and conveyed on an endless conveyor (10) through a line of baking ovens, characterised in that, in order to obtain a closed-pore longitudinal edge configuration after the baking process, the strip of dough (12), before being placed on the endless conveyor (10), is divided into a number of separate parallel individual strips of dough (20), optionally with narrow transverse spaces in between, and having a final width corresponding to one of the two edge lengths of the rectangular crispbread slices when ready for packing, the longitudinal edges being made thicker than the longitudinal central region, the slices being packed after baking without a change in width.

2. A method according to claim 1, characterised in that the longitudinal edges of the individual strips of dough (20) are given a substantially convex configuration.

3. A method according to claim 1 or 2, characterised in that before being placed on the endless conveyor (10), the individual strips of dough (20) are split up transversely to their longitudinal extension into individual pieces of dough (38), optionally spaced apart lengthwise, having a transverse edge configuration which is closed after baking and having a length equal to the other of the two edge lengths of the rectangular crispbread slices when ready for packing.

4. A method according to claim 3, characterised in that the transverse edges of the individual pieces of dough (38) are made thicker than their central region.

5. A method according to claim 3 or 4, characterised in that the individual pieces of dough (38) are separated by being deposited at adjustable time intervals on the endless belt (10).

6. A device for working the method according to any of the preceding claims, comprising a homogenising container for preparing the dough, a delivery device following the homogenising container and preferably in the form of delivery rollers comprising two smoothing rollers (22, 24) rotating in opposite directions and for producing an endless strip of dough (12) extending substantially vertically downwards and having a width greater than the maximum width permitted in the baking process, a preferably horizontal endless conveyor (10) for carrying the strip of dough and conveying it through a line of ovens, and devices for longitudinally and transversely dividing the strip of dough into flat pieces having a size permitted in the baking process, characterised by a dividing device (16, 32) for dividing the strip of dough (12) leaving the delivery device (22, 24) into a number of transversely-spaced, parallel separate individual strips of dough (20) having a longitudinal edge configuration which is closed after the baking process and having longitudinal edges which are thicker than their longitudinal central region and a final width equal to one of the two edge lengths of the rectangular crispbread slices when ready for packing.

7. A device according to claim 6, characterised in that the dividing device has a number of elongate shaping nozzles (16), the longitudinal axis of the nozzle mouths (18) being parallel to the plane of the strip of dough (12), and the cross-section of the nozzle mouths (18) being substantially rectangular and elongate, the cross-section of the nozzle mouths (18) widening near their ends.

8. A device according to claim 7, characterised in that the mouths (18) of the shaping nozzles (16) widen like a club near their ends.

9. A device according to claim 6, characterised in that the delivery device (22, 24) is followed by a number of dividing blades (32) spaced apart by an amount substantially equal to the desired width of the individual strips of dough (20).

10. A device according to claim 9, characterised in that the dividing blades (32) comprise knife edges facing the dough supply device and at right angles to the axis of the smoothing rollers (22, 24) when a roller delivery device is used.

11. A device according to claim 9 or 10, characterised in that the dividing blades (32) have concave shaping surfaces (36) facing the dough discharge direction and for giving a convex longitudinal edge configuration to the individual strips of dough (20).

12. A device according to any of claims 6 to 11, characterised in that the dividing device (16, 32) is followed by a splitting-up device (40, 44) which splits up the individual strips of dough (20), before they reach the endless conveyor (10), into individual pieces of dough (28) having a closed transverse edge configuration.

13. A device according to claim 12, characterised in that the conveying speeds of the delivery device (22, 24) on the one hand and the endless conveyor (10) on the other hand are adapted to one another so that the individual pieces of dough (38) on the endless conveyor (10) can be given an adjustable longitudinal spacing.

14. A device according to claim 12 or 13, characterised in that the splitting-up device has a number of cutting wires (40) movable in reciprocation transversely to the dividing device (16, 32).

15. A device according to claim 12 or 13, characterised in that the splitting-up device comprises a separating nozzle arrangement (44) for directing a jet of separating fluid (46) at right angles to the direction of transport and on to the individual strips of dough (20) hanging from the delivery device (22, 24).

16. A device according to claim 15, characterised in that the separating-nozzle arrangement comprises a separating nozzle (44) movable in reciprocation transversely to the transport direction of the individual strips of dough (20).

17. A device according to claim 15 or 16, characterised in that the separating nozzle (44) can be supplied with separating gas,

18. A device according to any of claims 15 to 17, characterised in that the separating nozzle (44) can be supplied with separating fluid.

## Revendications

1. Procédé de fabrication de pain croustillant, dans lequel de la pâte sous la forme d'une bande de pâte sans fin (12), dont la largeur excède la largeur maximum admise pour l'opération de cuisson, est prélevée dans un récipient d'homogénéisation - de préférence au moyen d'un extracteur à rouleaux muni de deux rouleaux lisses (22, 24) tournant en sens inverse - et acheminée sur un convoyeur sans fin (10) pour être cuite au passage d'un four continu après avoir été divisée longitudinalement et transversalement en galettes de taille admise pour l'opération de cuisson, caractérisé en ce que, pour obtenir une configuration des bords longitudinaux avec des pores fermés après l'opération de cuisson, la bande de pâte (12) est divisée, avant d'être déposée sur le convoyeur sans fin (10), en une pluralité de bandes individuelles de pâte (20) qui sont parallèles - avec, le cas échéant, un léger écartement transversal mutuel - et possèdent une largeur définitive correspondant à l'une des deux longueurs d'arête des tranches de pain croustillant rectangulaires prêtes à l'emballage, dont les bords longitudinaux sont plus épais que leur zone centrale longitudinale, les tranches de pain croustillant étant emballées avec une dimension en largeur inchangée après l'opération de cuisson.

2. Procédé selon la revendication 1, caractérisé en ce que les bords longitudinaux des bandes individuelles de pâte (20) possèdent une configuration sensiblement convexe.

3. Procédé selon la revendication 1 ou 2, caractérisé en ce que, avant d'être déposées sur le convoyeur sans fin (10), les bandes individuelles de pâte (20) sont séparées, transversalement à leur extension longitudinale, en pâtons individuels (38) - qui présentent, le cas échéant, un écartement longitudinal mutuel - et qui possèdent une configuration fermée des bords transversaux après l'opération de cuisson et une longueur correspondant à l'autre des deux longueurs d'arête des tranches de pain croustillant rectangulaires prêtes à l'emballage.

4. Procédé selon la revendication 3, caractérisé en ce que les bords transversaux des pâtons individuels (38) sont plus épais que leur zone centrale.

5. Procédé selon la revendication 3 ou 4, caractérisé en ce que les pâtons individuels (38) sont séparés les uns des autres en étant déposés sur le convoyeur sans fin (10) avec un décalage réglable dans le temps.

6. Dispositif de réalisation du procédé selon l'une des revendications précédentes, comprenant un récipient d'homogénéisation servant à préparer la pâte, un dispositif d'extraction disposé en aval du récipient d'homogénéisation - et conçu de préférence sous la forme d'un extracteur à rouleaux muni de deux rouleaux lisses (22, 24) tournant en sens inverse - pour produire une bande de pâte sans fin (12) qui s'étend sensiblement verticalement vers le bas et dont la largeur excède la largeur maximum admise pour l'opération de cuisson, un convoyeur sans fin (10) - de préférence horizontal - pour déposer la bande de pâte et la transporter à travers un four continu, et des dispositifs pour diviser longitudinalement et transversalement la bande de pâte en galettes de taille admise pour l'opération de cuisson, caractérisé en ce qu'il comprend un dispositif diviseur (16, 32) pour diviser la bande de pâte (12) quittant le dispositif d'extraction (22, 24) en une pluralité de bandes individuelles de pâte séparées et parallèles (20) qui présentent un écartement transversal mutuel et possèdent une configuration fermée des bords longitudinaux après l'opération de cuisson, des bords longitudinaux plus épais que leur zone centrale longitudinale et une largeur définitive correspondant à l'une des deux longueurs d'arête des tranches de pain croustillant rectangulaire prêtes à l'emballage.

7. Dispositif selon la revendication 6, caractérisé en ce que le dispositif diviseur comporte une pluralité de buses de moulage allongées (16) dont l'axe longitudinal de leur embouchure de buse (18) est parallèle au plan de la bande de pâte (12) et dont l'embouchure de buse (18) présente une section transversale sensiblement rectangulaire allongée, la section transversale de l'embouchure de buse (18) étant élargie à proximité de ses extrémités.

8. Dispositif selon la revendication 7, caractérisé en ce que l'embouchure de buse (18) des buses de moulage (16) est évasée en forme de lobe.

9. Dispositif selon la revendication 6, caractérisé en ce que, en aval du dispositif d'extraction (22, 24), est prévue une pluralité de lames diviseuses (32) dont l'écartement mutuel correspond sensiblement à la largeur des bandes individuelles de pâte (20) à fabriquer.

10. Dispositif selon la revendication 9, caractérisé en ce que les lames diviseuses (32) comportent des arêtes de coupe (34) qui sont orientées dans la direction d'alimentation de la pâte et qui, en cas d'emploi d'un extracteur à rouleaux, sont perpendiculaires à l'axe des rouleaux lisses (22, 24).

11. Dispositif selon la revendication 9 ou 10, caractérisé en ce que les lames diviseuses (32) comportent des surfaces de moulage concaves (36) qui sont orientées dans la direction d'évacuation de la pâte et qui sont destinées à obtenir une configuration convexe ces bords longitudinaux des bandes individuelles de pâte (20).

12. Dispositif selon l'une des revendications 6 à 11, caractérisé en ce que, en aval du dispositif diviseur (16, 32), est prévu un dispositif séparateur (40, 44) qui sépare les bandes individuelles de pâte (20), avant qu'elles n'atteignent le convoyeur sans fin, en pâtons individuels (28) possédant une configuration fermée des bords transversaux.

13. Dispositif selon la revendication 12, caractérisé en ce que la vitesse de transport, d'une part, du dispositif d'extraction (22, 24) et, d'autre part, du convoyeur sans fin (10) peuvent être harmonisées, de façon que les pâtons individuels (38) puissent être déposés sur le convoyeur sans fin (10) avec un écartement longitudinal mutuel réglable.

14. Dispositif selon la revendication 12 ou 13, caractérisé en ce que le dispositif séparateur comporte une pluralité de fils coupants (40) pouvant effectuer un mouvement de va-et-vient transversalement au dispositif diviseur (16, 32).

15. Dispositif selon la revendication 12 ou 13, caractérisé en ce que le dispositif séparateur comporte un dispositif de buse séparatrice (44) pour envoyer un jet séparateur d'agent d'écoulement (46), perpendiculairement à la direction de transport, sur les bandes individuelles de pâte (20) qui pendent du dispositif d'extraction (22, 24).

16. Dispositif selon la revendication 15, caractérisé en ce que le dispositif de buse séparatrice comporte une buse séparatrice (44) pouvant effectuer un mouvement de va-et-vient transversalement à la direction de transport des bandes individuelles de pâte (20).

17. Dispositif selon la revendication 15 ou 16, caractérisé en ce que la buse séparatrice (44) peut être alimentée par du gaz de séparation.

18. Dispositif selon l'une des revendications 15 à 17, caractérisé en ce que la buse séparatrice (44) peut être alimentée par du liquide de séparation.
